(19) **Europäisches Patentamt**
**European Patent Office**
**Office européen des brevets**

(11) **EP 2 930 680 A1**

(12) **EUROPEAN PATENT APPLICATION**
published in accordance with Art. 153(4) EPC

(43) Date of publication:
**14.10.2015 Bulletin 2015/42**

(51) Int Cl.:
*G06Q 30/06* (2012.01)     *G06K 17/00* (2006.01)
*A47F 10/02* (2006.01)

(21) Application number: **13859918.8**

(22) Date of filing: **12.09.2013**

(86) International application number:
**PCT/JP2013/005399**

(87) International publication number:
**WO 2014/087560 (12.06.2014 Gazette 2014/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.12.2012 JP 2012265428**

(71) Applicant: **NEC Corporation**
**Tokyo 108-8001 (JP)**

(72) Inventor: **FUKUDA, Hiroshi**
**Tokyo 108-8001 (JP)**

(74) Representative: **Vossius & Partner**
**Patentanwälte Rechtsanwälte mbB**
**Siebertstrasse 3**
**81675 München (DE)**

(54) **PRODUCT MANAGEMENT SYSTEM, PRODUCT MANAGEMENT METHOD, AND NON-TEMPORARY COMPUTER-READABLE MEDIUM FOR STORING PRODUCT MANAGEMENT PROGRAM**

(57) A commodity management system includes: a plurality of specific information storage means (101) provided so as to correspond to commodity display locations (111) on a commodity display rack (110); commodity information storage means (102) for storing commodity information regarding a commodity (112) displayed on the commodity display rack (110); specific information reading means (103) for transmitting location specifying information that has been read out from the specific information storage means (101); commodity presence/absence state determination means (104) for determining the presence or the absence of the commodity (112) in the commodity display rack (110) when a readout signal transmitted from the specific information reading means (101) stops or an intensity of the readout signal is lower than a predetermined threshold; and commodity information display means (105) for displaying the commodity information according to a result of a determination regarding the presence or the absence of the commodity (112). Accordingly, it is possible to monitor the state of arrangement of commodities arranged in the commodity display rack at a reduced cost.

Fig. 1

EP 2 930 680 A1

**Description**

**Technical Field**

The present invention relates to a commodity management system, a commodity management method, and a non-transitory computer readable medium storing a commodity management program, and more particularly, to a commodity management system, a commodity management method, and a non-transitory computer readable medium storing a commodity management program that manage commodities displayed on a commodity display rack.

**Background Art**

In related art, it is possible to grasp the stock status in a store in association with a Point of Sales (POS) system. However, it is difficult to grasp the presence or the absence of commodities in a commodity display rack. Therefore, even hot-selling commodities are often missing in the commodity display rack, which causes sales opportunity losses. Further, although it is known that the amount of sales clearly change according to the arrangement of commodities in the commodity display rack, it takes time for a sales person to constantly check the arrangement of the commodities in the commodity display rack and thus the commodities are uncontrolled and therefore not appropriately arranged to increase the sales of the commodities. Another problem is that commodities such as beverages are not sufficiently cooled down and thus consumers may not be satisfied with such commodities they have purchased. There has also been a demand to detect commodities that have not even been touched by consumers for a long time after the commodities were placed in the commodity display rack and efficiently replace these commodities by other commodities.
One example of the techniques related to overcoming these above problems and satisfying the above demands is disclosed in Patent literature 1 and 2.

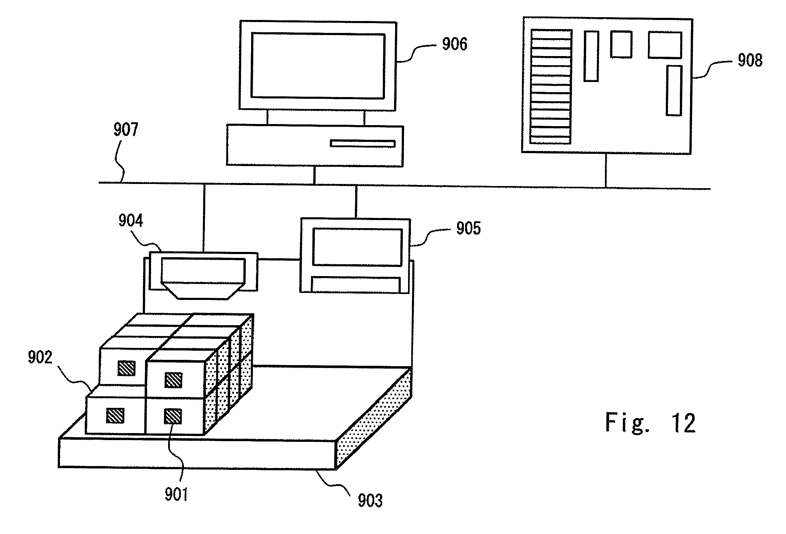

Fig. 12 shows a configuration of a commodity display rack system according to the related art disclosed in Patent literature 1. As shown in Fig. 12, the commodity display rack system according to the related art includes a commodity 902 to which an RFID tag 901 is attached on a target commodity display rack 903, a commodity information reading apparatus 904 that reads out information in the RFID tag 901, a store management device 906 and a commodity management apparatus 908 connected to the commodity information reading apparatus 904 via a communication network 907, and a commodity information display device 905 that transmits ordering information of out-of-stock commodities and inventory management information from the information that has been read out to the store management device 906 and the commodity management apparatus 908 via the communication network 907.
The commodity display rack system including the above configuration according to the related art operates as follows. That is, the commodity information reading apparatus 904 attached to the commodity display rack 903 that constantly reads out the information reads out the tag of the commodity 902 to which the RFID tag 901 is attached placed in the commodity display rack 903. When the commodity 902 is picked up and taken away from the commodity display rack 903, the commodity information reading apparatus 904 cannot read the RFID tag 901 anymore. By this information, it is possible to determine the out-of-stock information, display the out-of-stock information on the store management device 906 or the commodity management apparatus 908 via the communication network 907, and back-order the out-of-stock commodities.

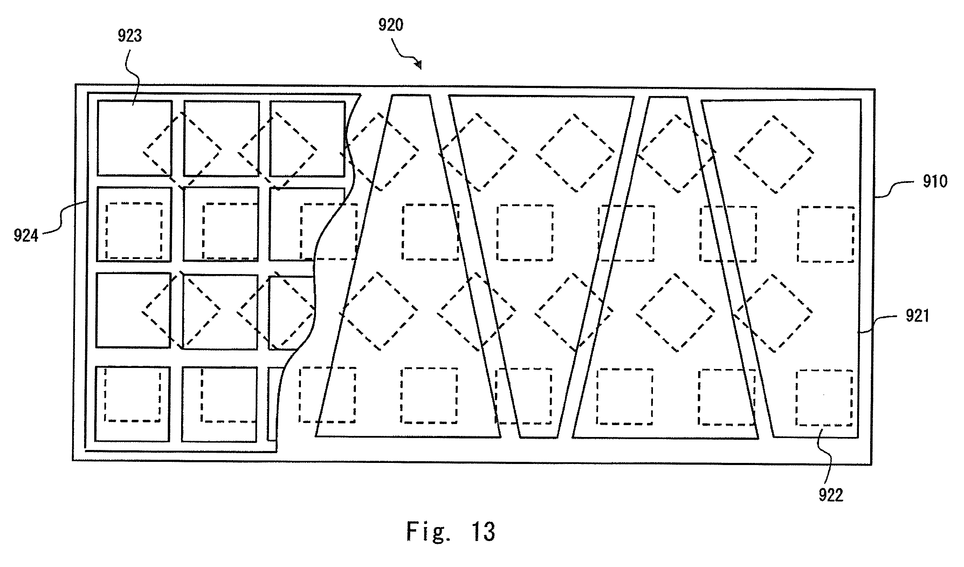

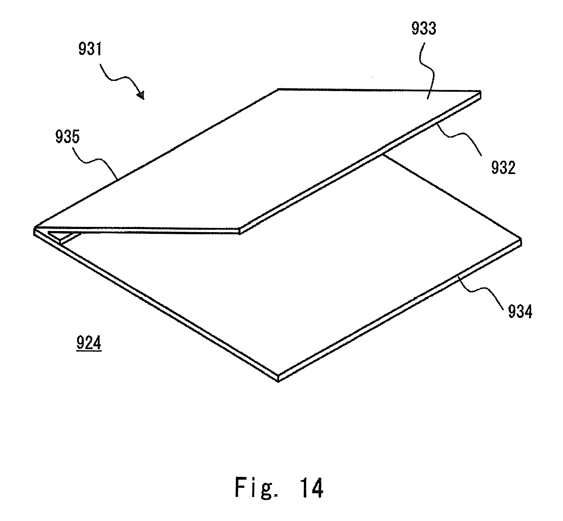

Figs. 13 and 14 show configurations of a commodity detection unit and an interference unit according to the related art disclosed in Patent literature 2. As shown in Fig. 13, a commodity detection unit 910 according to the related art includes a display part antenna 921 that is integrally formed with a rack 920 and an electromagnetic tag 922 arranged on the display part antenna 921.
Further, as shown in Fig. 14, an interference unit 931 that interferes with electromagnetic waves is provided on the commodity 923 or the electromagnetic tag 922 placed on the display part antenna 921. This interference unit 931 includes a sheet substrate 932 formed of a material such as synthetic resin, a metal electromagnetic wave shielding sheet 933 that is attached to the upper surface of the sheet substrate 932 and interferes with electromagnetic waves, and a base 934 having a lower surface attached to the upper surface of a surface plate 924.
The commodity display rack system according to the related art including such a commodity detection unit 910 operates as follows. When a commodity 923 is placed in a state in which the display part antenna 921 constantly reads out the electromagnetic tag 922 arranged on the display part antenna 921, the electromagnetic wave interference unit 931 provided on the bottom surface of the commodity 923 or on the electromagnetic tag 922 on the display part antenna 921 prevents the electromagnetic tag 922 which the commodity 923 approaches closely to from being read out, and it is detected that there is a commodity 923 since the electromagnetic tag 922 which the commodity 923 approaches closely to can no longer be read out.

Citation List

**Patent Literature**

[Patent literature 1]Japanese Unexamined Patent Application Publication No. 2005-34358
[Patent literature 2]Japanese Unexamined Patent Application Publication No. 2010-211451

**Summary of Invention**

**Technical Problem**

One problem in Patent literature 1 is that, since the tag is attached to each commodity, the cost for managing the commodities increases and it is difficult to apply the technique of Patent literature 1 to inexpensive commodities. Further, in Patent literature 1, specific information storage means stores the positions of the commodities in the rack in advance, whereby it is possible to manage the positions of the commodities in the rack. However, the commodities must be arranged in the same way as they are stored in the specific information storage means which increases the cost for managing the commodities.

One problem in Patent literature 2 is that, although it is possible to grasp the positions of the commodities, an auxiliary device which serves as the interference unit is required when the commodities are non-metal commodities in addition to the electromagnetic tag to determine the positions of the commodities. This increases the cost when the interference unit is attached to each commodity and raises a maintenance problem due to a possible breakage when the interference unit is arranged in the display rack.

In view of the aforementioned problems, the present invention mainly aims to provide a system capable of constantly monitoring the state of arrangement of commodities arranged in a commodity display rack.

**Solution to Problem**

A commodity management system according to the present invention includes: a plurality of specific information storage means so as to correspond to commodity display locations on a commodity display rack, the specific information storage means storing location specifying information to specify the commodity display locations; commodity information storage means for storing commodity information regarding a commodity displayed on the commodity display rack; specific information reading means for reading out the location specifying information stored in the specific information storage means and transmitting a readout signal including the location specifying information that has been read out; commodity presence/absence state determination means for determining the presence or the absence of the commodity corresponding to the location specifying information in the commodity display rack when the readout signal transmitted from the specific information reading means stops or an intensity of the readout signal is lower than a predetermined threshold; and commodity information display means for displaying, according to a result of a determination in the commodity presence/absence state determination means, the commodity information stored in the commodity information storage means in relation to the commodity that is determined.

A commodity management method according to the present invention includes: providing a plurality of specific information storage means corresponding to commodity display locations on a commodity display rack, the specific information storage means storing location specifying information to specify the commodity display locations; storing commodity information regarding a commodity displayed on the commodity display rack in commodity information storage means; reading out the location specifying information stored in the specific information storage means and transmitting a readout signal including the location specifying information that has been read out; determining the presence or the absence of the commodity corresponding to the location specifying information in the commodity display rack when the readout signal that is transmitted stops or an intensity of the readout signal is lower than a predetermined threshold; and displaying, according to a result of a determination regarding the presence or the absence of the commodity, the commodity information stored in the commodity information storage means in relation to the commodity that is determined.

A non-transitory computer readable medium storing a commodity management program according to the present invention stores a commodity management program for causing a computer to execute commodity management processing, the commodity management processing including: storing commodity information regarding a commodity displayed on a commodity display rack in commodity information storage means; receiving a readout signal including location specifying information read out from specific information storage means arranged on the commodity display rack; determining the presence or the absence of the commodity corresponding to the location specifying information in the commodity display rack when the readout signal stops or an intensity of the readout signal is lower than a predetermined threshold; and displaying, according to a result of a determination regarding the presence or the absence of the commodity, the commodity information stored in the commodity information storage means in relation to the commodity that is determined.

**Advantageous Effects of Invention**

According to the present invention, it is possible to provide a commodity management system, a commodity management method, and a non-transitory computer readable medium storing a commodity management program capable of constantly monitoring the state of arrangement of commodities arranged in a commodity display rack at a low cost.

**Brief Description of Drawings**

Fig. 1 is a configuration diagram for describing the main characteristics of a commodity management system according to an exemplary embodiment;
Fig. 2 is a configuration diagram showing a configuration of the commodity management system according to a first exemplary embodiment;
Fig. 3 is a block diagram showing a configuration of a store management device according to the first exemplary embodiment;
Fig. 4 is a three-sided view in which a commodity display location of a commodity display rack according to the first exemplary embodiment is enlarged;
Fig. 5 is a side view in which the commodity display location of the commodity display rack according to the first exemplary embodiment is enlarged;
Fig. 6 is a table showing a relation between electric fields and a distance of an RFID tag according to the first exemplary embodiment;
Fig. 7 is a flowchart showing a commodity management method according to the first exemplary embodiment;
Fig. 8 is a flowchart showing the commodity management method according to the first exemplary embodiment;
Fig. 9 is a flowchart showing the commodity management method according to the first exemplary embodiment;
Fig. 10 is a flowchart showing the commodity management method according to the first exemplary embodiment;
Fig. 11 is a flowchart showing the commodity management method according to the first exemplary embodiment;
Fig. 12 is a configuration diagram of a commodity display rack system according to Patent literature 1;
Fig. 13 is a configuration diagram of a commodity detection unit according to Patent literature 2; and
Fig. 14 is a configuration diagram of an interference unit according to Patent literature 2.

**Description of Embodiments**

(Features of exemplary embodiment)

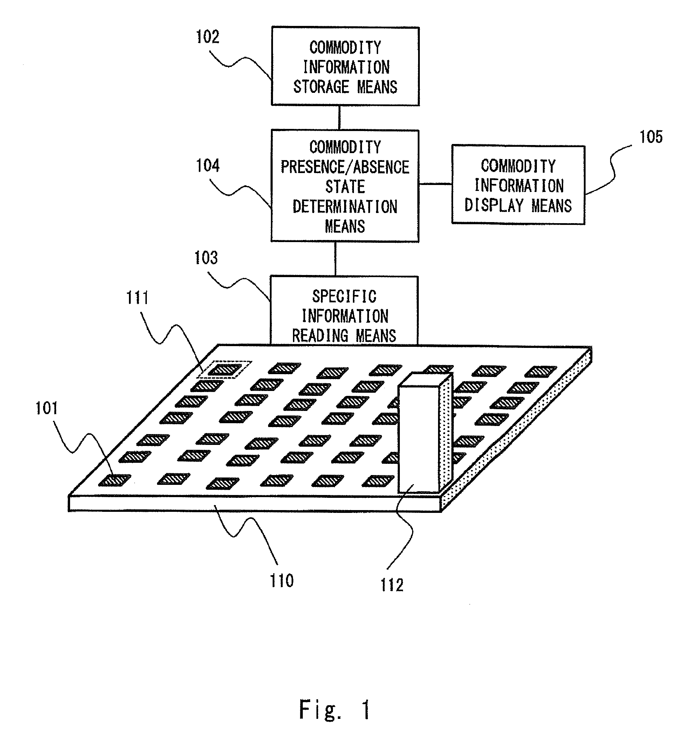

Prior to the description of an exemplary embodiment, the outline of the characteristics of the exemplary embodiment will be described. Fig. 1 shows a main configuration of a commodity management system (commodity display rack system) according to this exemplary embodiment.

As shown in Fig. 1, the commodity management system according to this exemplary embodiment includes a specific information storage means 101, a commodity information storage means 102, a specific information reading means 103, a commodity presence/absence state determination means 104, and a commodity information display means 105.

A plurality of the specific information storage means 101 are arranged to correspond to commodity display locations 111 on a commodity display rack 110 and store location specifying information (corresponding to, for example, an RFID tag described later) that specifies the commodity display locations 111. The commodity information storage means 102 stores commodity information regarding a commodity 112 displayed in the commodity display rack 110 (corresponding to, for example, a commodity information database described later). The specific information reading means 103 reads out the location specifying information stored in the specific information storage means 101 and transmits a readout signal including the location specifying information that has been read out (corresponding to, for example, a commodity information reading apparatus or an RFID reader described later).

The commodity presence/absence state determination means 104 determines the presence or the absence of the commodity 112 corresponding to the location specifying information in the commodity display rack 110 when the readout signal transmitted from the specific information reading means 103 stops or the intensity of the readout signal is lower than a predetermined threshold (corresponding to, for example, a commodity presence/absence determination unit described later). The commodity information display means 105 displays, according to the results of the determination in the commodity presence/absence state determination means 104, commodity information stored in the commodity information storage means 102 regarding the commodity that is determined (corresponding to, for example, a display unit or a commodity information display device described later).

As described above, in Patent literature 1, it is required to attach the tag to each commodity and to arrange the commodities according to the determined positions thereof, which increases the management cost. Further, in Patent literature 1, there is a privacy problem in that a third party may read a purchaser, the purchaser purchased the commodity attached the tag. Patent literature 2 requires an auxiliary device which serves as the interference unit. The cost increases when the interference unit is attached to each commodity and raises a maintenance problem of due to a possible breakage when the interference unit is arranged in the display rack. While the electromagnetic tag using electromagnetic wave induction is used in Patent literature 2, when a large number of tags are placed in the rack, it takes time to constantly check the state of arrangement of the commodities due to a slow communication speed.

Accordingly, a first exemplary object of this exemplary embodiment is, as stated above, to provide a system capable of constantly monitoring the state of arrangement of the commodities arranged in the commodity rack at a reduced cost. In addition, this exemplary embodiment also attains the following exemplary objects.

A second exemplary object of this exemplary embodiment is to provide a commodity management system capable of monitoring the state of the display, determining whether the display is a front stereoscopic display, determining whether commodities need to be replenished, and displaying a notice. A third exemplary object of the exemplary embodiment is to provide a commodity management system capable of detecting theft or abnormal arrangement in association with a POS system. A fourth exemplary object of the exemplary embodiment is to provide a commodity management system capable of notifying a purchaser whether the temperature of a commodity that needs to be cooled down or heated up is set to an appropriate temperature. A fifth exemplary object of the exemplary embodiment is to provide a commodity management system capable of displaying a commodity that remains in the commodity display rack for a long term and to improve the sales efficiency in the commodity display rack.

As shown in Fig. 1, the commodity management system according to this exemplary embodiment mainly includes the specific information storage means 101, the commodity information storage means 102, the specific information reading means 103, the commodity presence/absence state determination means 104, and the commodity information display means 105. With the use of this system, it is possible to detect that the commodity has been placed in the commodity display rack at a reduced cost and to accomplish the first exemplary object. That is, by constantly monitoring the state of the commodity such as an out-of-stock state on the commodity display rack, sales opportunity losses which are caused due to the commodity not being placed on the display rack can be reduced.

Further, by arranging the specific information storage means 101 that stores information to specify the location of commodities at least below the commodity placed in the front row of the commodity display rack 110, the state of the display may be constantly monitored, the presence or the absence of the commodity which is in the forefront of the rack may be determined by the commodity presence/absence state determination means 104, and it may be displayed by a display device such as a commodity display rack display device (forefront alarm information display means) that the display is not a front stereoscopic display. By employing such a configuration, the above second exemplary object can be accomplished.

Further, a sales information storage apparatus may also be provided. When the commodity presence/absence state determination means 104 detects that the commodity has been taken from the commodity display rack, an elapsed time after the commodity has been taken from the commodity display rack may be recorded. When the time until when the sales information storage apparatus determines that the commodity has been purchased or the commodity presence/absence state determination means 104 determines that the commodity has been returned exceeds a predetermined period of time, alarm information display means (elapsed time alarm information display means) may display alarm information of a target commodity. It is therefore possible to determine whether any abnormal situation has occurred in the commodity (stolen or inappropriately arranged) and thus to accomplish the above third exemplary object.

Further, the present invention may include means for displaying alarm information (commodity state alarm display means) when it is determined that a predetermined period of time has passed after a commodity was placed on a commodity display rack having heating and cooling functions. It is therefore possible to notify a consumer that the commodity that was retrieved from a warehouse or the like at a normal temperature and needs to be cooled down or heated up has been set to an appropriate temperature required by the consumer and thus to accomplish the above fourth exemplary aspect.

Further, by measuring the elapsed time after the commodity was placed in the commodity display rack, it is possible to monitor the cycle time from the time at which the commodity was placed in the commodity display rack to the time at which the commodity was sold, and the information of the commodity that remains in the commodity display rack for a long time may be displayed (means for displaying a commodity remaining for a long term). This helps to promote the sales efficiency in the commodity display rack and thus to accomplish the fifth exemplary object.

(First exemplary embodiment)

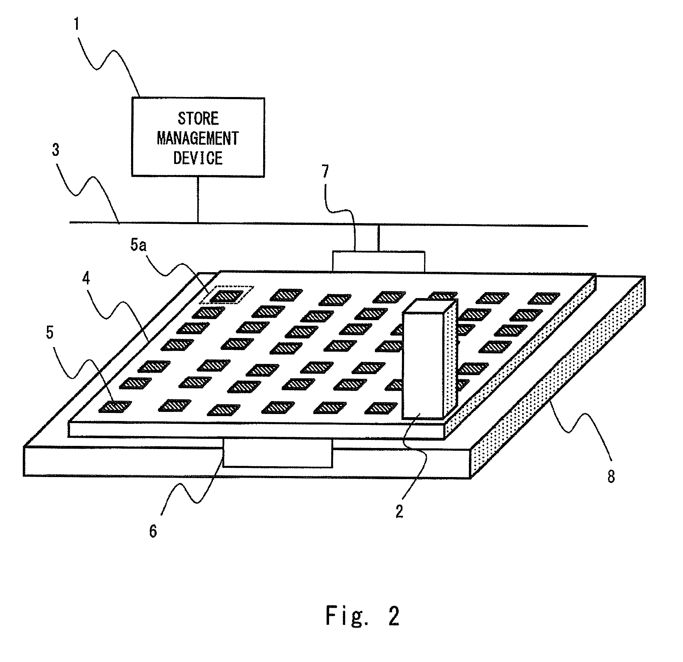

Next, with reference to the drawings, a first exemplary embodiment of the present invention will be described in detail. Fig. 2 is a block diagram showing one configuration example of a commodity management system (commodity display rack system) according to this exemplary embodiment. This commodity management system constantly monitors commodities displayed in a commodity display rack in a store or the like and displays warning information regarding the presence or the absence of the commodities in the commodity display rack and the state of the display.

In the commodity display rack system as shown in Fig. 2, a commodity information reading apparatus (RFID reader) 7, a commodity information display device 6, and a store management device 1 are connected via a communication network 3 such as a LAN so that data can be exchanges among them.

A reader antenna (information receiving antenna) 4 connected to the commodity information reading apparatus 7 is provided in a commodity display rack 8 installed in a store, and a plurality of RFID tags 5 are aligned on the reader antenna 4. The RFID tag 5 is arranged in a commodity display location 2a that displays a commodity 2, and a tag ID that the RFID tag 5 stores and location information in the commodity rack are associated with each other. That is, the tag ID of the RFID tag 5 is location specifying information that specifies the location in which the commodity is arranged. The RFID tag 5 may store, in addition to the location specifying information, information that specifies the commodity, and the commodity and the location in which the commodity is arranged may be specified by reading out the RFID tag 5.

The commodity information reading apparatus 7 supplies electric power to the RFID tags 5 through the reader antenna 4 by radio waves and receives radio signals transmitted from the RFID tags 5 through the reader antenna 4. The commodity information reading apparatus 7 includes a reception unit that retrieves information from the received radio signals and a transmission/reception unit that transmits the information transmitted from the RFID tags 5 to the store management device 1 as needed (for example, a predetermined time interval such as one second).

When the commodity 2 is not placed in the location where the RFID tag 5 exists, the commodity information reading apparatus 7 and each of the RFID tags 5 are able to communicate with each other due to electromagnetic field coupling with the waveguide-type reader antenna 4 in a near-field region. On the other hand, when the commodity 2 is placed in the location where the RFID tag 5 exists, the communication between the corresponding RFID tag 5 and the commodity information reading apparatus 7 changes the state of the electromagnetic field coupling due to metal or dielectric of the commodity 2 itself, which causes an interruption of the information transmitted from the RFID tag 5 to the commodity information reading apparatus 7 or a decrease in the signal intensity. Since the information is interrupted or the signal intensity decreases, the reader antenna 4 transmits to the store management device 1 that there is a commodity 2 in the corresponding position, whereby the store management device 1 is able to grasp the state of the commodities on the commodity display rack 8.

The commodity information display device 6 is arranged near the commodity display rack 8 and displays the commodity information regarding the commodity 2 displayed in the commodity display rack 8. The commodity information display device 6 notifies a customer of, for example, out-of-stock information or the like of a commodity not being displayed in the commodity display rack 8 due to the commodity being out-of-stock or the like.

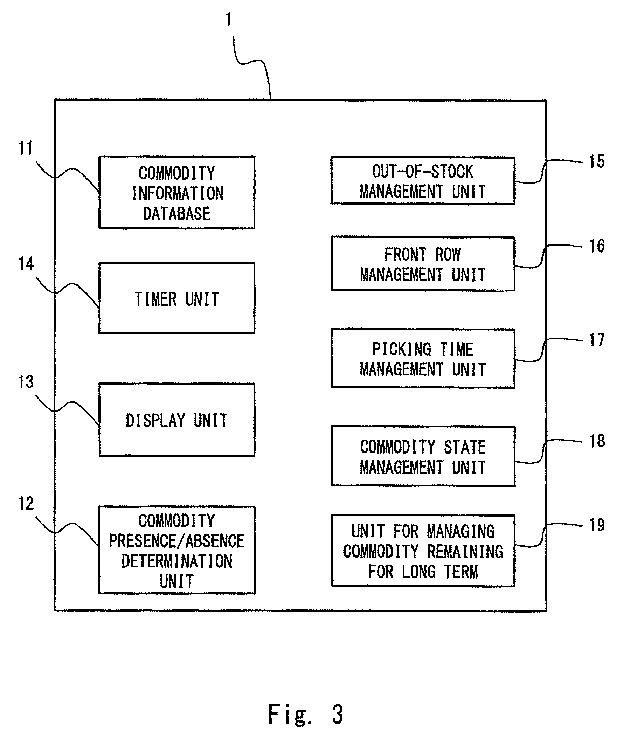

Fig. 3 is a functional block diagram showing one example of the configuration of the store management device 1. In the configuration example shown in Fig. 3, the store management device 1 includes a commodity information database 11, a commodity presence/absence determination unit 12, a display unit 13, a timer unit 14, an out-of-stock management unit 15, a front row management unit 16, a picking time management unit 17, a commodity state management unit 18, and a unit for managing a commodity remaining for a long term 19. While each block is described as the function of the store management device 1, each block may be included in the commodity information reading apparatus 7 and the commodity information reading apparatus 7 may transmit necessary information to the store management device 1. A state in which the commodity was picked up by the customer from the commodity display rack and taken away from the commodity display rack will be simply expressed by stating that the commodity was picked up (picking).

The store management device 1 is formed of, for example, a general computer device. The store management device 1 includes a central processing unit (CPU), a storage device such as a memory or a hard disc device, an input device such as a keyboard, a display device such as a liquid crystal display, and a communication unit connected to the communication network 3. The storage device stores a commodity management program to execute commodity management processing according to this exemplary embodiment, and this program is executed by the CPU, whereby each functional block is achieved. The store management device 1 may be formed of a plurality of computers, not a single computer.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The commodity information database 11 stores the commodity information regarding the commodity 2 displayed in the commodity display rack 8. The commodity information is associated with, for example, the name of the commodity, the type of the commodity, the location information in the commodity display rack in which the commodity is arranged (tag ID of the RFID tag 5), out-of-stock information indicating whether the commodity is out of stock. The commodity information is stored in the commodity information database 11 and is updated as necessary.

The commodity presence/absence determination unit 12 determines the presence or the absence of the commodity (display state) in the commodity display rack 8 according to a signal received from the commodity information reading apparatus 7. As described above, the commodity presence/absence determination unit 12 receives the intensity or the like of the signal received by the commodity information reading apparatus 7 from the RFID tag 5. When the signal is interrupted or the intensity of the signal is lower than a predetermined threshold, it is determined that there is no commodity in the commodity display rack 8.

The display unit 13 displays the commodity information or the like to the store manager according to the results of determination by the commodity presence/absence determination unit 12 (according to the reception status from the commodity information reading apparatus 7). The display unit 13 displays, for example, the out-of-stock information of the commodity, the display state in the front row of the commodity display rack, whether a predetermined period of time has passed after the commodity was picked up, the state of the commodity that is arranged, and the commodity remaining for a long term.

In order to manage the state of the commodity and the like, the timer unit (elapsed time storage means) 14 starts a timer when the commodity presence/absence determination unit 12 determines that there is a change in the commodity presence/absence state (display state) in the commodity display rack 8.

When the commodity presence/absence determination unit 12 determines that there is no commodity (picked up) in the commodity display rack 8, the out-of-stock management unit 15 refers to the commodity information database 11, specifies the out-of-stock commodity information, and displays the information of the specified commodity on the display unit 13. For example, the out-of-stock management unit 15 and the display unit 13 (commodity information display device 6) form out-of-stock commodity information display means.

When the commodity presence/absence determination unit 12 determines that there is no commodity (picked up) in the commodity display rack 8 and there is no commodity in the front row of the commodity display rack 8, the front row management unit 16 displays error on the display unit 13. Further, the front row management unit 16 displays error on the display unit 13 also when the number of same kind of commodities displayed in the commodity display rack 8 is smaller than a specified amount. For example, the front row management unit 16 and the display unit 13 (commodity information display device 6) form front row (forefront) alarm information display means or display amount alarm information display means.

When the commodity presence/absence determination unit 12 determines that there is no commodity (picked up) in the commodity display rack 8 and a predetermined period of time has passed, the picking time management unit 17 displays error on the display unit 13. For example, the picking time management unit 17 and the display unit 13 (commodity information display device 6) form picking time (elapsed time) alarm information display means.

When the commodity presence/absence determination unit 12 determines that the commodity is arranged in the commodity display rack 8 and a predetermined period of time has passed, the commodity state management unit 18 displays the state of the commodity on the display unit 13. For example, the commodity state management unit 18 and the display unit 13 (commodity information display device 6) form commodity state information display means.

When the commodity presence/absence determination unit 12 determines that the commodity is arranged in the commodity display rack 8 and a long time has elapsed, the unit for managing a commodity remaining for a long term 19 displays error on the display unit 13. For example, the unit for managing a commodity remaining for a long term 19 and the display unit 13 (commodity information display device 6) form means for displaying alarm information of a commodity remaining for a long term.

Next, a configuration for achieving the commodity presence/absence detection method according to this exemplary embodiment using the commodity information reading apparatus 7, the reader antenna 4, and the RFID tag 5 (detection means of the commodity presence/absence information determination means, or commodity presence/absence detection unit) and detection principles will be described in detail. For example, the commodity information reading apparatus 7, the reader antenna 4, and the RFID tag 5 form a commodity presence/absence detection unit and the commodity presence/absence determination unit 12 determines, according to an output from the commodity presence/absence detection unit, the presence or the absence of the commodity, whereby the commodity presence/absence detection method according to this exemplary embodiment may be achieved.

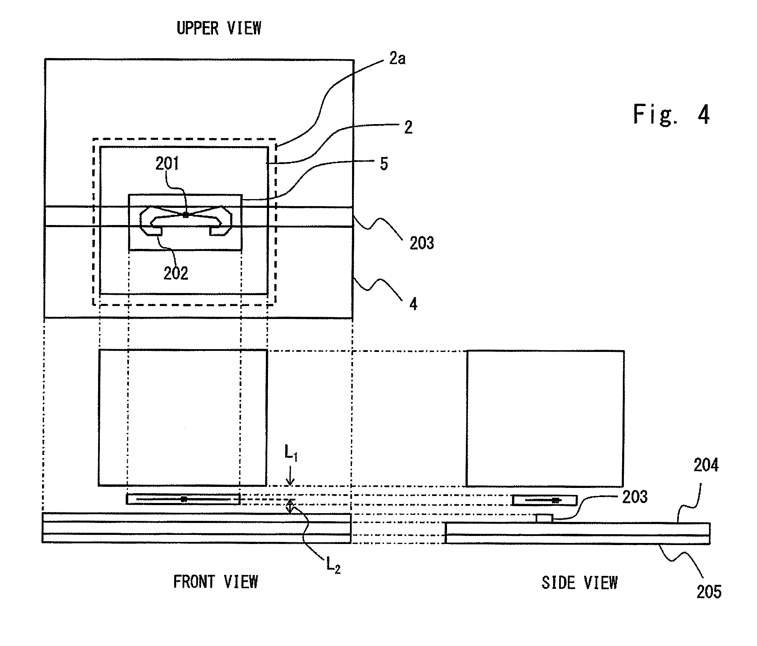

The reader antenna 4 is formed of an open-type transmission line that is match-terminated, and the open-type transmission line may be, for example, a microstrip structure, a coplanar line, or a slot line. Fig. 4 shows a three-sided view for describing the commodity presence/absence detection unit including the RFID tag 5 and the reader antenna 4 using the microstripline structure according to this exemplary embodiment. Fig. 4 shows an enlarged view of a region in the commodity display rack 8 in which one commodity 2 is placed.

As shown in Fig. 4, in this detection unit, the reader antenna 4 is a traveling-wave type near-field region antenna for the reader using the microstripline, which is one of the open-type transmission line. The reader antenna 4 includes a dielectric layer 204, and a strip conductor 203 is formed on the upper surface of the dielectric layer 204. A ground plane 205 is formed on the lower surface of the dielectric layer 204. The RFID tag 5 is arranged on the reader antenna 4. Further, the commodity 2 is placed on the RFID tag 5 in the commodity display location 2a in such a way that the RFID tag 5 is covered with the commodity 2. Further, the RFID tag 5 includes an RFID chip 201 and a tag antenna 202.

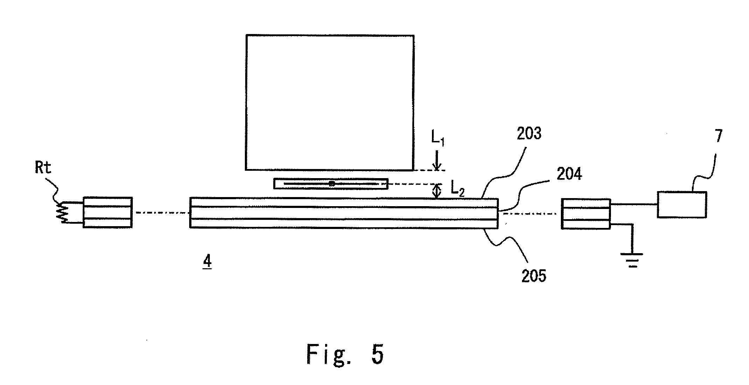

Next, Fig. 5 shows a front view for describing the commodity presence/absence detection unit including the reader antenna 4, the RFID tag 5, and the commodity information reading apparatus 7 according to this exemplary embodiment. Fig. 5 shows an enlarged view of a region in the commodity display rack 8 in which one commodity 2 is placed, as is similar to Fig. 4.

As shown in Fig. 5, in this detection unit, the strip conductor 203 is formed on the upper surface of the dielectric layer 204 of the reader antenna 4. The ground plane 205 is formed on the lower surface of the dielectric layer 204. One end of the strip conductor 203 and the ground plane (ground conductor) 205 are connected together via a matching termination resistor Rt. According to such a connection, the reader antenna 4 is match-terminated. Further, the RFID reader (commodity information reading apparatus) 7 is connected to the other end of the reader antenna 4.

Further, as shown in Fig. 5, the commodity 2 is located at a position in which the distance between the tag antenna 202 of the RFID tag 5 and the commodity 2 becomes a first distance L1. The tag antenna 202 of the RFID tag 5 is located at a position in which the distance between the tag antenna 202 and the strip conductor 203 becomes a second distance L2. The first distance L1 and the second distance L2 are preferably set so as to satisfy the relation L1<L2.

Only the relation of the distance among the commodity 2, the tag antenna 202, and the strip conductor 203 is shown in Fig. 5. However, in order to satisfy the relation of the above distance, when, for example, the RFID tag 5 is covered with a plastic plate or the like, the thickness of the plastic plate may be taken into consideration. That is, by embedding the RFID tag 5 in the plastic plate and forming a sheet into which the RFID tag is incorporated by the plastic plate, the above first distance L1 can be secured.

Further, by disposing a spacer between the RFID tag 5 and the reader antenna 4, for example, it is possible to provide a board that supports the tag and to secure the second distance L2. This method is one exemplary aspect to secure the first distance L1 and the second distance L2 and other methods may be used. For example, in order to secure the second distance L2, the strip conductor 203 and the tag antenna 202 may be spaced apart from each other by the distance L2 on the same plane.

Now, with reference to Figs. 4 and 5, effects by the relations of the components of the commodity presence/absence detection unit will be described more specifically.

First, as shown in Fig. 4, in the commodity presence/absence detection unit, the commodity 2 is arranged above the tag antenna 202 of the RFID tag 5 so that the distance between the tag antenna 202 and the commodity 2 becomes the first distance L1. Further, the reader antenna 4 connected to the RFID reader 7 is arranged below the RFID tag 5 so that the line-of-sight distance between the reader antenna 4 and the tag antenna 202 becomes the second distance L2. As stated above, in this detection unit, the commodity 2 is arranged in the area other than the area held between the reader antenna 4 and the RFID tag 5. Accordingly, the line-of-sight between the reader antenna 4 and the RFID tag 5 is not interrupted by the commodity 2. Further, in this detection unit, the distance between the reader antenna 4 and the tag antenna 202 is denoted by the second distance L2.

As described above, in this detection unit, it is desirable that the first distance L1 between the commodity 2 and the tag antenna 202 and the second distance L2 which is the line-of-sight distance between the tag antenna 202 and the reader antenna 4 be adjusted. Further, in this detection unit, it is desirable that a coupling coefficient k2 between the commodity 2 and the tag antenna 202 and a coupling coefficient k1 between the tag antenna 202 and the reader antenna 4 be adjusted by adjusting the first distance L1 and the second distance L2. This detection unit changes the signal intensity between the tag antenna 202 and the reader antenna 4 according to the coupling coefficient k2 that varies depending on the presence or the absence of the commodity 2 to determine the presence or the absence of the commodity 2 depending on the change in the signal intensity.

A relation among the first distance L1, the second distance L2, and the coupling coefficients k1 and k2, and effects of the commodity presence/absence information detection unit according to this exemplary embodiment based on the settings of the first distance L1, the second distance L2, and the coupling coefficients k1 and k2 will be described below.

First, while electromagnetic field coupling is used in this exemplary embodiment, the coupling coefficients indicating the intensities of the electromagnetic field coupling may be evaluated by an electromagnetic field simulator relatively easily. Further, in the description of the electromagnetic field coupling, when the wavelength of a radio signal between the tag antenna 202 and the reader antenna 4 is denoted by $\lambda$, an area in which the distance from a wave source (for example, antenna) is closer than λ/2π (π is a circular constant) is called a reactive near-field, an area in which the distance from the wave source is far from λ/2π and is closer than λ is called a radiative near-field, and these two regions are collectively called a near-field region.

In this near-field region, the electromagnetic field shows a complicated aspect, each of a quasi-static electromagnetic field, an induction field, and a radiation electromagnetic field has an intensity ratio that is not negligible, and the vector obtained by synthesizing the electromagnetic fields variously changes spatially and temporally. As one example, a case in which the wave source is a small dipole antenna is assumed. In such a case, when an electric field E[V/m] and a magnetic field H[A/m] that the antenna forms are represented by spherical-coordinate systems (γ, θ, φ) and a phasor representation, they can be expressed by the following Expressions (1) to (4).

$$E_\theta = \frac{ql}{4\pi\varepsilon}\left\{\frac{1}{r^3} + \frac{1}{r^2}\cdot\frac{1}{(\lambda/2\pi)}\cdot e^{j\frac{\pi}{2}} + \frac{1}{r}\cdot\frac{1}{(\lambda/2\pi)^2}\cdot e^{j\pi}\right\}\cdot e^{-jkr}\cdot\sin\theta \ \cdots \ (1)$$

$$E_r = \frac{ql}{2\pi\varepsilon}\left\{\frac{1}{r^3} + \frac{1}{r^2}\cdot\frac{1}{(\lambda/2\pi)}\cdot e^{j\frac{\pi}{2}}\right\}\cdot e^{-jkr}\cdot\cos\theta \ \cdots \ (2)$$

$$H_\phi = \frac{ql}{4\pi\sqrt{\varepsilon\mu}}\left\{\frac{1}{r^2}\cdot\frac{1}{(\lambda/2\pi)}\cdot e^{j\frac{\pi}{2}} + \frac{1}{r}\cdot\frac{1}{(\lambda/2\pi)}\cdot e^{j\pi}\right\}\cdot e^{-jkr}\cdot\sin\phi \ \cdots \ (3)$$

$$E_\phi = H_\theta = H_r = 0 \ \cdots \ (4)$$

In the above Expressions (1) to (4), charges stored in the small dipole antenna is denoted by q[C], the length of the antenna is denoted by 1[m], the wavelength is denoted by λ[m], and the distance from the wave source to an observation point is denoted by γ[m]. Further, π represents a circular constant, ε represents a dielectric constant, and μ represents a magnetic permeability. In the above Expressions (1) to (4), the item proportional to $1/\gamma 3$ is the quasi-static electromagnetic field, the item proportional to $1/\gamma 2$ is the induction field, and the item proportional to $1/\gamma$ is the radiation electromagnetic field. Since these electromagnetic field components have different dependencies with respect to the distance γ, the relative intensity changes depending on the distance γ.

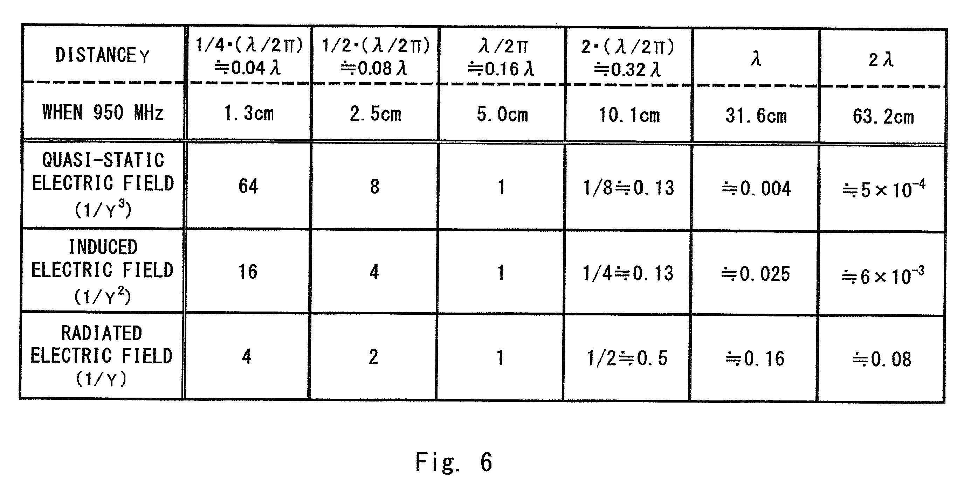

Next, Fig. 6 shows a table indicating dependencies regarding the distance γ standardized by the wavelength λ for the relative intensities of the quasi-electrostatic field, the induction electric field, and the radiation electric field in an electric field Eθ. The second row of the table shown in Fig. 6 shows the distances converted by the free space wavelength of 950 MHz, which is substantially the same as the frequency of the Ultra High Frequency (UHF)-band RFID allowed in the Japanese Radio Act.

As will be understood from the table shown in Fig. 6, when the distance γ increases, the strength of each of the electric fields becomes small, and each component ratio changes as well. For example, in the region of γ<λ/2π, the electric field which has the greatest strength is the quasi-electrostatic field, the induction electric field has the next greatest strength, and the radiation electric field has the least strength, and in the region of γ>λ/2π, the electric field which has the least strength is the quasi-electrostatic field, the induction electric field has the next least strength, and the radiation electric field has the greatest strength. Further, in the region of γ>λ, the contributions of the quasi-electrostatic field and the induction electric field are extremely small, and in a far field, which is the region of γ>2λ, only the radiation electric field component substantially makes a contribution. On the other hand, in the region of γ<λ, the quasi-electrostatic field and the induction electric field still sufficiently make contributions, and in the reactive near-field of γ<λ/2π, the quasi-electrostatic field and the induction electric field make great contributions.

Further, as shown in Expressions (1) to (4), compared to the radiation electric field, the quasi-static electromagnetic field and the induction field include components of various directions including γ-direction components and φ-direction components in addition to θ-direction components. In general, in such a reactive near-field, compared to the radiation electromagnetic field that is radiated into space from the antenna and propagates through the space, the quasi-static electromagnetic field and the induction field that remain around the antenna are dominant and the absolute electromagnetic field intensity is also strong. In the radiative near-field, in general, the absolute electromagnetic field intensity becomes weaker with the increase in the distance from the wave source. Further, the relative intensity of the quasi-static electromagnetic field and the induction field becomes weak and the relative intensity of the radiation electromagnetic field becomes strong. As described above, in the near-field region, the quasi-static electromagnetic field and the induction field are included, and due to these electromagnetic fields, the coupling between the reader antenna 4 and the tag antenna 202 and the coupling between the tag antenna 202 and the commodity 2 are achieved.

In a passive RFID system that uses a normal UHF band or a microwave band, the distance $\gamma$ between the reader antenna 4 and the tag antenna 202 satisfies the relation of $y > \lambda$, and the radiation electromagnetic field is used for the communication. In order to efficiently generate the radiation electromagnetic field, a resonant antenna represented by a patch antenna is used as the reader antenna 4. When such a resonant antenna is used in the near-field region of $\gamma < \lambda$, the electromagnetic field intensity greatly changes depending on the location due to the standing waves in the resonant antenna. For example, the amplitude becomes the largest at around the apices of the standing waves, and the amplitude becomes 0 in the midpoint of the standing wave. Accordingly, when the distance $\gamma$ between the tag antenna 202 and the reader antenna 4 using such a resonant antenna satisfies the relation of $\gamma < \lambda$, the tag antenna may not be able to receive signals from the reader antenna at a position around the midpoint of the standing wave in the reader antenna and the reception signal intensity becomes extremely weak. In summary, an insensitive region is created, which affects the use of the RFID tag.

On the other hand, the antennas may be electromagnetically coupled to each other through the quasi-state electromagnetic field and the induction field included in the near-field region of $\gamma < \lambda$, or more preferably the reactive near-field of $\gamma < \lambda/2\pi$ to form a coupling circuit. In such a case, there is no need to provide a wide space between the RFID reader and the RFID tag according to the condition. However, a simple use of the resonant antenna as the reader antenna 4 generates an insensitive region, which affects the use of the RFID tag. Further, the size of the standing wave antenna is typically about $\lambda$, and when the standing wave antenna is used in proximity to the tag, the coverage area of the standing wave antenna becomes extremely narrow.

In the commodity presence/absence detection unit according to this exemplary embodiment, the RFID tag 5 is arranged so that the reader antenna 4 connected to the RFID reader 7 is formed of an open-type transmission line that is match-terminated and the open-type transmission line and the tag antenna 202 of the RFID tag 5 are electromagnetically coupled. In this detection unit, by using the open-type transmission line that emits less electric waves as the reader antenna 4 of the RFID reader 7, the reader antenna 4 and the tag antenna 202 are electromagnetically coupled through the quasi-static electromagnetic field and the induction field that are mainly generated around the open-type transmission line to form a coupling circuit. That is, the open-type transmission line is used as a traveling wave antenna that operates in the near-field region. According to this configuration, there is no need to provide a wide space between the reader antenna 4 and the RFID tag 5. Further, since the communication between the reader antenna 4 and the tag antenna 202 is carried out in the short distance through the coupling circuit, it is possible to suppress the occurrence of the multipath phenomenon and a false detection caused due to an interposition of a person or an object between the reader antenna 4 and the location in which the commodity 2 is arranged. Further, since the open-type transmission line that is match-terminated is used as the reader antenna 4, the main components of the electromagnetic waves propagating through the antenna do not generate standing waves and propagate through the antenna to the match terminal as traveling waves. That the standing waves are not generated strictly means that the standing waves are sufficiently small, and usually means that the standing wave ratio is 2 or smaller, and more preferably, 1.2 or smaller.

When the termination of the transmission line is matched with a sufficient accuracy or the electromagnetic waves propagating through the transmission line sufficiently decay at around the termination, large standing waves are not generated in the transmission line and the main component is the traveling waves. With the use of the electromagnetic field distribution in such a transmission line, the traveling wave antenna can be formed. Further, in an electromagnetic field formed in the space around this line, the range of radiation electromagnetic field is relatively small, and the main components are the static electromagnetic field and the induction field. The electromagnetic field intensity of the induction field and the static electromagnetic field is higher than the intensity of the radiation electromagnetic field. Even when the reader operates at the same power, the electromagnetic field intensity that the RFID tag 5 can obtain is strong. In other words, it is possible to form an environment in which the radiation electromagnetic field is not dispersed while allowing the tag to normally operate.

In the standing wave antenna such as a patch antenna that is normally used, the electromagnetic field distribution around the antenna is extremely uneven according to the standing waves inside the antenna. In such a standing wave antenna, in order to avoid the insensitive part, the region in which the commodity 2 can be managed is limited. Meanwhile, in the case of the traveling wave antenna formed of the open-type transmission line according to this exemplary embodiment, even at an area around the antenna, there is no part such as a nodal part that does not change in the electromagnetic field distribution and every part constantly changes. Accordingly, in the near-field region as well, there is no uneven part in the electromagnetic field according to the standing waves along the antenna, and there is no area where it is not possible to read out the tag information of the RFID tag 5. In summary, the flexibility in arranging the reader antenna 4 and the tag antenna 202 increases.

Further, in the commodity presence/absence detection unit according to this exemplary embodiment, the communication is performed through the electromagnetic field coupling between the reader antenna 4 and the tag antenna 202 using the traveling waves as signals. Therefore, an insensitive region is not generated, as is different from the resonant antenna, which does not affect the use of the RFID tag. Accordingly, the detection unit extends the transmission line within the range in which the intensity of the induction field and the quasi-static electromagnetic field generated around the open-type transmission line is large enough to operate the RFID tag 5 regardless of the wavelength, whereby it is possible to widen the coverage area. In summary, in the commodity presence/absence detection unit according to this exemplary embodiment, by use of the aforementioned open-type transmission line, it is possible to suppress the radiation loss of power and to easily enlarge the coverage area.

The open-type transmission line in this specification is an open-type transmission line which aims to basically suppress radiation and transmit electromagnetic waves in the longitudinal direction of the line. The open-type transmission line may be a balanced two-wire transmission line or transmission lines similar to the balanced two-wire transmission line, a transmission line such as a microstripline, a coplanar line, or a slot line, or a grounded coplanar line or a triplate line, which are variations of these transmission lines. Alternatively, the open-type transmission line may be, although it depends on the condition for use, an antenna which extends in a plane that changes the electromagnetic field in the narrow area held between a mesh-type conductor part and a sheet-type conductor part and a leak region which is outside of the mesh-type conductor part to transfer signals. In the antenna that extends in a plane, standing waves are mixed. The antenna that extends in a plane also operates as a traveling wave antenna, although not being a perfect traveling wave antenna, and is available if the unevenness of the electromagnetic field distribution caused by the standing waves can be neglected. On the other hand, a shielding-type transmission line that does not generate such an electromagnetic field around the transmission line such as a waveguide or a coaxial cable that shields the part around the transmission line is not available.

Further, there is an electromagnetic wave transmission sheet which generates an electromagnetic field in the narrow area held between conductive sheet bodies that are opposed to each other, changes a voltage between the two conductive sheets to change the electromagnetic field or changes the voltage between the conductive sheet bodies due to the change in the electromagnetic field to move the electromagnetic field in a desired direction. In a broader sense, this electromagnetic wave transmission sheet may be regarded as one of the open-type transmission line according to this exemplary embodiment when seen from the longitudinal direction of the sheet. However, in the electromagnetic wave transmission sheet, the transmission coefficient fluctuates due to the standing waves in the sheet. Therefore, the standing waves are quite large and it is not necessarily optimal to use the electromagnetic wave transmission sheet in this exemplary embodiment. Further, when the electromagnetic wave transmission sheet is used, the upper surface of the waveguide is made of metal mesh which is much finer than the wavelength and it can be regarded that evanescent waves leak from the upper surface. Such a transmission line including a plurality of slots from which electromagnetic field leaks with a gap, a width, or a length less than one tenth of those of the wavelength can be regarded as one type of the open-type transmission line used for the commodity presence/absence detection unit according to this exemplary embodiment.

Meanwhile, the traveling wave antenna that aims to perform electromagnetic radiation in a far field using so-called a crank-line antenna, a meander line antenna, or a leaky coaxial cable that obtains a constant radiation electromagnetic field intensity by designing the crank shape for the radiation from the open-type transmission line or aggressively using a higher-order mode and the open-type transmission line used for the commodity presence/absence detection unit according to this exemplary embodiment are different from each other. Since radiation preferentially occurs from cranks or slots periodically provided to have the size of the order of the wavelength, or typically the size of about one tenth of the wavelength or larger, the intensity of the electromagnetic field greatly varies depending on the position, as is similar to the resonant antenna described above. Accordingly, when used in the near-field region, it may be possible that the reading of the tag information may be unstable or the tag may not be read out depending on the position, which obstructs the use of the RFID tag. Further, in the UHF-band RFID system, allocated frequencies differ in accordance with the respective countries, and are distributed in the bandwidth of about 860 to 960 MHz. This corresponds to a bandwidth ratio of about 10%, which is so large that it requires substantial changes in the design of the resonance point of the resonant antenna or the cycles of the cranks, the meanders, and the slots. Meanwhile, in the commodity presence/absence detection unit according to this exemplary embodiment, the open-type transmission line originally having an extremely wide bandwidth is used. It is therefore possible to use the same antenna as the reader antenna 4 without any special changes.

Further, in the commodity presence/absence detection unit according to this exemplary embodiment, the commodity display location 2a where the commodity 2 is placed is provided apart from the RFID tag 5 so that the commodity 2 and the tag antenna 202 of the RFID tag 5 are electromagnetically coupled. Accordingly, since the commodity 2 and the tag antenna 202 form the coupling circuit when there is a commodity 2, the resonance frequency of the tag antenna 202 changes or the feed point impedance of the tag antenna 202 changes compared to a case in which there is no commodity 2. The tag antenna 202 is created to resonate at a frequency of the signal used for the communication in the free space, to have the adjusted feed point impedance, and to have a maximized receiving sensitivity. Therefore, the above changes lower the receiving sensitivity and further badly affects the operation of the tag antenna 202 when the reflected signals are sent to the RFID reader 7. As a result, the received power sensitivity with respect to signals used for the communication is lowered. Further, the transmission output of the signal reflected by the RFID tag 5 also decreases. Accordingly, the RFID tag 5 cannot receive the signal from the RFID reader 7, or cannot secure the operating power of the tag since the received power strength of the signal is low or the tag cannot generate a reflected electromagnetic field having a sufficient intensity. As a result, the RFID reader 7 can no longer read the tag information of the RFID tag 5. Otherwise, the intensity or the phase of the reflected electromagnetic field that reaches the RFID reader 7 greatly changes according to a change in the resonance frequency of the tag or the like. Accordingly, when the commodity 2 is in the commodity display location 2a, the tag information cannot be read out or the intensity of the reflected electromagnetic field from the RFID tag 5 greatly changes compared to the case in which there is no commodity 2. Therefore, the commodity presence/absence determination means is able to detect that there is a commodity 2. Accordingly, from the change in the operating characteristics of the tag antenna 202 depending on the presence or the absence of the commodity 2, the RFID reader 7 is able to detect the change in the intensity of the reflected signal from the RFID tag 5 and the commodity presence/absence determination means is able to detect, from the detection results, the presence or the absence of the commodity.

Next, the commodity management method (commodity management processing) executed in the commodity management system according to this exemplary embodiment will be described. All the commodity management methods described below may be executed or only an arbitrary commodity management method may be executed as needed.

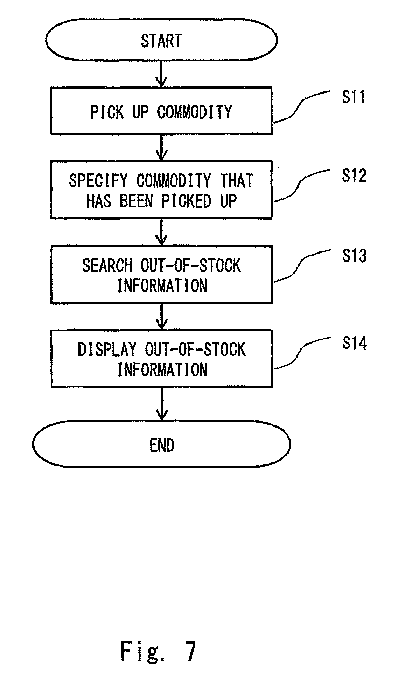

Fig. 7 shows a method for displaying the out-of-stock information included in the commodity management method according to this exemplary embodiment. As shown in Fig. 7, the customer first picks up the commodity 2 displayed in the commodity display rack 8 (S11). As stated above, when the commodity 2 has been picked up, the intensity of the signal received by the reader antenna 4 from the RFID tag 5 changes. Then, the signal transmitted from the commodity information reading apparatus 7 to the commodity presence/absence determination unit 12 also changes, whereby the commodity presence/absence determination unit 12 detects that there is no commodity (picked up).

Next, the commodity that has been picked up is specified (S12) and the out-of-stock commodity is searched (S13). The out-of-stock management unit 15 refers to the commodity information database 11 and specifies the commodity corresponding to the location information of the RFID tag 5 where the signal intensity has changed. Further, the out-of-stock management unit 15 refers to the commodity information database 11 and searches out-of-stock information corresponding to the commodity that is specified.

Next, the out-of-stock information is displayed (S14). The out-of-stock management unit 15 displays the out-of-stock information that has been retrieved on the display unit 13 of the store management device 1. The out-of-stock information that has been retrieved may be displayed on the commodity information display device 6. For example, when the commodity that has been picked up is out of stock, information of this commodity is displayed. Alternatively, an out-of-stock commodity among the same kind of commodities as the commodity that has been picked up may be displayed.

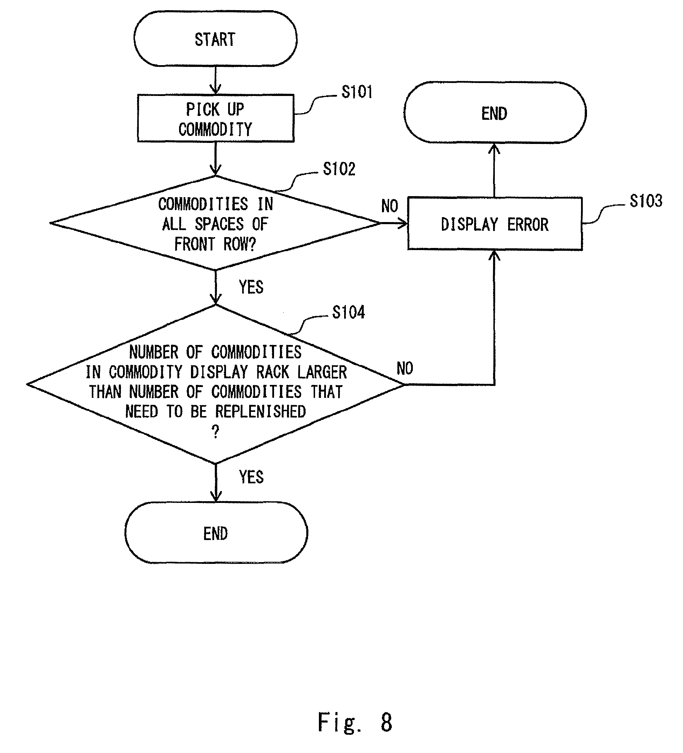

Fig. 8 shows a front row error display method included in the commodity management method according to this exemplary embodiment. The front row error display method is a method for detecting whether the commodity 2 is arranged in the commodity display rack 8 in a front stereoscopic arrangement and needs to be replenished.

As shown in Fig. 8, the customer first picks up the commodity 2 displayed in the commodity display rack 8 (S101). As stated above, when the commodity 2 has been picked up, the intensity of the signal received by the reader antenna 4 from the RFID tag 5 changes, and the commodity presence/absence determination unit 12 detects that there is no commodity (picked up).

Next, it is determined whether there are commodities in all of the spaces of the front row of the commodity display rack 8 (S102). The front row management unit 16 reads out, from the commodity information reading apparatus 7, the state of arrangement of the commodities in the commodity display rack 8 by the reader antenna 4 to determine whether there is a commodity in the front row of the commodity display rack 8. It may be determined whether there are commodities in all of the spaces of the front row or it may be determined whether there are commodities in a part of the spaces of the front row.

When it is determined in S102 that there is no commodity in the front row of the commodity display rack 8, error is displayed (S103). When it is determined that the commodity has been picked up and there is no commodity in the front row, the front row management unit 16 displays error on the display unit 13 indicating that there is no commodity in the front row. When there is no commodity in the front row, the commodity information reading apparatus 7 may send information indicating that the corresponding commodity is not arranged in the front row to the store management device 1 using the communication network 3 to display error. The error may be displayed on the commodity information display device 6.

When it is determined in S102 that there are commodities in all of the spaces in the front row of the commodity display rack 8, it is determined whether the number of commodities arranged in the commodity display rack 8 is larger than the number of commodities that need to be replenished (S104). The front row management unit 16 reads out, by the reader antenna 4, the state of arrangement of the commodities arranged in the commodity display rack 8 from the commodity information reading apparatus 7 and determines the number of corresponding commodities placed in the commodity display rack 8. The number of commodities to be replenished is the number of commodities that need to be replenished according to the number of commodities determined from the sales speed of the commodities. This number may be the number of all commodities in the commodity display rack 8 or may be the number of same kind of commodities.

When it is determined in S104 that the number of commodities arranged in the commodity display rack 8 is larger than the number of commodities to be replenished, the processing is ended. On the other hand, when the number of commodities arranged in the commodity display rack 8 is equal to or smaller than the number of commodities to be replenished, error is displayed (S103). When the commodity has been picked up and it is determined that the number of commodities arranged in the commodity display rack 8 is equal to or smaller than the number of commodities to be replenished, the front row management unit 16 displays error on the display unit 13 indicating that the commodities need to be replenished. Alternatively, the commodity information reading apparatus 7 may send the information indicating that the number of commodities arranged in the commodity display rack 8 is equal to or smaller than the number of commodities to be replenished to the store management device 1 using the communication network 3 to display error. The error may be displayed on the commodity information display device 6.

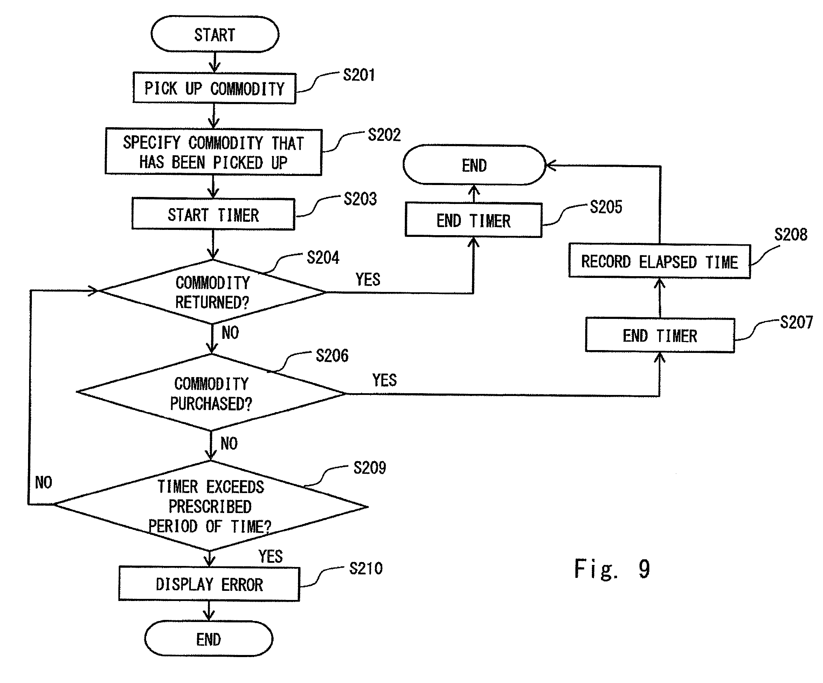

Fig. 9 shows a picking time error display method included in the commodity management method according to this exemplary embodiment. The picking time error display method is a method for detecting that the commodity 2 arranged in the commodity display rack 8 has been stolen or rearranged in another position.

As shown in Fig. 9, a customer first picks up the commodity 2 displayed in the commodity display rack 8 (S201). As described above, when the commodity 2 has been picked up, the intensity of the signal received by the reader antenna 4 from the RFID tag 5 changes, and the commodity presence/absence determination unit 12 detects that there is no commodity (picked up).

Next, the commodity that has been picked up is specified (S202). When the commodity has been picked up, the picking time management unit 17 refers to the commodity information database 11 to specify the commodity corresponding to the location information of the RFID tag 5 in which the signal intensity has changed. At this time, a timer that records the elapsed time is started at the same time (S203). When the commodity is picked up, the picking time management unit 17 starts the timer of the timer unit 14.

Next, it is determined whether the commodity has been returned (S204). When the customer returns the commodity 2 to the commodity display rack 8, the intensity of the signal received by the reader antenna 4 from the RFID tag 5 changes, whereby the commodity presence/absence determination unit 12 detects that there is a commodity.

When it is determined in S204 that the commodity has been returned, the timer is stopped (S205) and the processing is ended. When the commodity was picked up and then returned within a predetermined period of time, the picking time management unit 17 stops the timer of the timer unit 14, and the processing is normally ended without displaying error.

When it is determined in S204 that the commodity has not been returned, it is determined whether the commodity was purchased (S206). The picking time management unit 17 makes an inquiry, for example, to the POS system whether the commodity that had been picked up was purchased. The store management device 1 and the POS system may be connected through the communication network 3 or the store management device 1 and the POS system may be one apparatus.

When it is determined in S206 that the commodity was purchased, the timer is stopped (S207), the elapsed time is recorded (S208), and the operation is ended. When the commodity was picked up and then purchased within a predetermined period of time, the picking time management unit 17 stops the timer of the timer unit 14, records the elapsed time, and the processing is normally ended without displaying error. For example, the elapsed time is stored and the next timer value (time) is determined based on this elapsed time.

When it is determined in S206 that the commodity has not been purchased, it is determined whether the timer has exceeded a prescribed time (S209). When the timer is within a prescribed time in S209, the determination from S204 to S206 is repeated. When the timer has exceeded a prescribed time, error is displayed (S210) and the processing is ended. When the state in which the commodity that was picked up has neither been returned nor purchased continues for more than the prescribed time defined in advance from the average necessary time from picking to purchasing, the picking time management unit 17 displays error on the display unit 13 to notify that the commodity has been stolen or rearranged in another position. Alternatively, the commodity information reading apparatus 7 may transmit the information indicating that the timer has exceeded a prescribed time to the store management device 1 using the communication network 3 to display error. The error may be displayed on the commodity information display device 6.

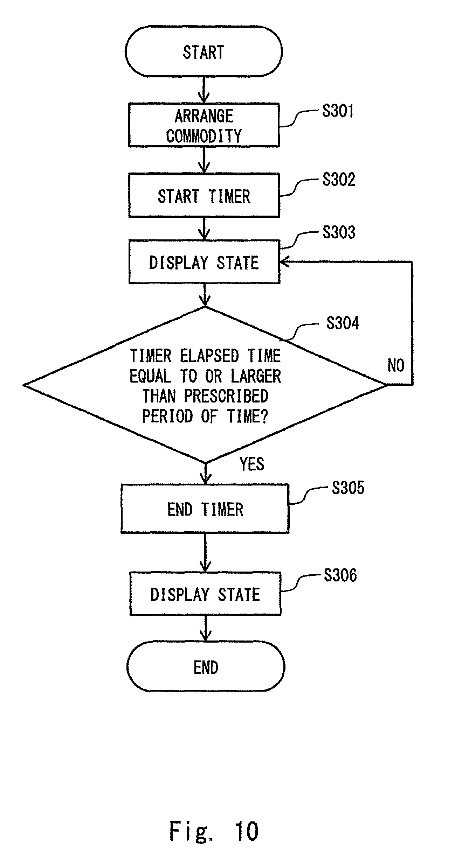

Fig. 10 shows a commodity state display method included in the commodity management method according to this exemplary embodiment. The commodity state display method is a method for notifying the purchaser whether a commodity which needs to be cooled down or heated up is set to an appropriate temperature.

As shown in Fig. 10, first, a sales person or the like arranges the commodity 2 in the commodity display rack 8 (S301). When the commodity 2 is arranged as stated above, the intensity of the signal received by the reader antenna 4 from the RFID tag 5 changes, and the commodity presence/absence determination unit 12 detects that there is a commodity. In this example, when the commodity which needs to be cooled down or heated up is placed in the commodity display rack including cooling and heating functions, the commodity presence/absence determination unit 12 detects the commodity. At this time, a timer that records the elapsed time is started at the same time (S302). When the corresponding commodity is arranged, the commodity state management unit 18 starts the timer of the timer unit 14 to display the commodity state.

Next, the state of the commodity is displayed (S303) and it is determined whether the elapsed time of the timer is equal to or larger than the prescribed time (S304). When the elapsed time of the timer is within the prescribed time, the display of the state of the commodity in S303 is continued. When the timer is within the prescribed time estimated from the temperature of the commodity before the commodity is placed in the commodity display rack 8 and the cooling and heating abilities, the commodity state management unit 18 displays that the commodity is being heated up or cooled down on the display unit 13. In this case, the information indicating that the commodity is being heated up or cooled down is preferably displayed on the commodity information display device 6 placed on the front surface of the commodity display rack 8 in order to notify the customer of this information.

When the elapsed time of the timer has reached the prescribed time in S304, the timer is ended (S305), the state of the commodity is displayed (S306), and the processing is ended. When the timer expires, the commodity state management unit 18 displays on the display unit 13 that the commodity has been set to the appropriate temperature. In this case, the information indicating that the commodity has been set to the appropriate temperature is preferably displayed on the commodity information display device 6 placed on the front surface of the commodity display rack 8 in order to notify the customer of this information.

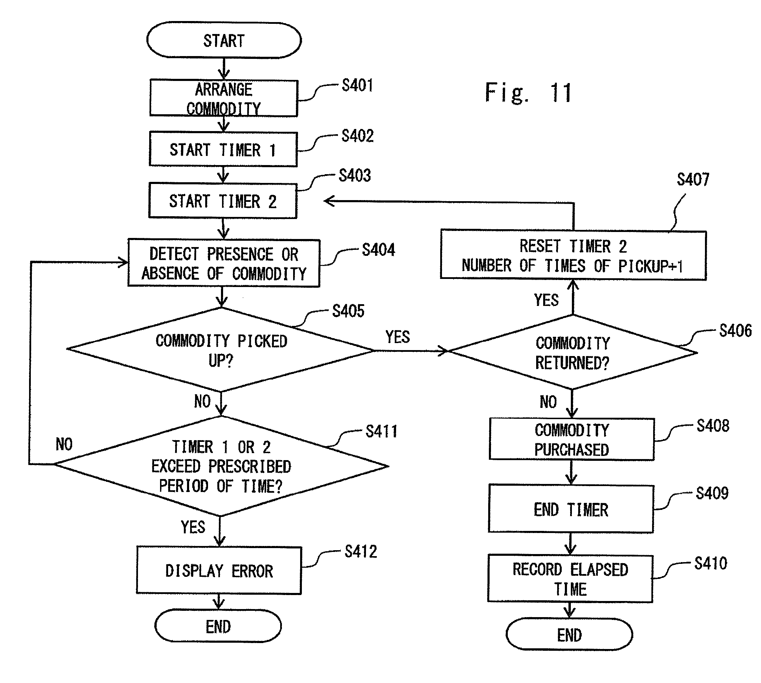

Fig. 11 shows a method for displaying a commodity remaining for a long term included in the commodity management method according to this exemplary embodiment. The method for displaying a commodity remaining for a long term is a method to display a commodity that remains in the commodity display rack 8 for a long term to improve the sales efficiency in the commodity display rack 8.

As shown in Fig. 11, first, a sales person or the like arranges the commodity 2 in the commodity display rack 8 (S401). When the commodity 2 is arranged as stated above, the intensity of the signal received by the reader antenna 4 from the RFID tag 5 changes, and the commodity presence/absence determination unit 12 detects that there is a commodity. At this time, timers 1 and 2 that record the elapsed time are started at the same time (S402, S403). The unit for managing a commodity remaining for a long term 19 starts the timers 1 and 2 of the timer unit 14 to detect the commodity remaining for a long term. Further, the unit for managing a commodity remaining for a long term 19 initializes the number of times of pickup indicating the number of times that the commodity has been picked up to 0 and stores the number of times of pickup in the storage device.

Then, the presence or the absence of the commodity is detected (S404) and it is determined whether the commodity has been picked up (S405). As described above, when the customer picks up the commodity, the intensity of the signal received by the reader antenna 4 from the RFID tag 5 changes, and the commodity presence/absence determination unit 12 detects that there is no commodity (picked up).

When it is detected in S404 that the commodity has been picked up, it is determined whether the commodity has been returned (S406). When the customer returns the commodity 2 to the commodity display rack 8, the intensity of the signal received by the reader antenna 4 from the RFID tag 5 changes, and the commodity presence/absence determination unit 12 detects that there is a commodity.

When it is determined in S406 that the commodity has been returned, the timer 2 is reset and the number of times of pickup is incremented by 1 (S407). When the commodity was picked up and then returned within a predetermined period of time, the unit for managing a commodity remaining for a long term 19 stops the timer 2 of the timer unit 14, and increments the number of times of pickup. The process then goes back to S403, where the timer 2 is restarted.

When it is determined in S406 that the commodity has not been returned and it is confirmed in the store management device 1 that the commodity was purchased (S408), the timer is ended (S409), the elapsed time is recorded, and the operation is ended (S410). The unit for managing a commodity remaining for a long term 19 makes an inquiry to the POS system to confirm that the commodity that has been picked up was purchased (S408). When the commodity was purchased, the timers 1 and 2 of the timer unit 14 are stopped and the elapsed time is recorded (S409). For example, the elapsed time is stored, and the values (time) of the next timers 1 and 2 are determined based on the elapsed time.

When it is determined in S405 that the commodity has not been picked up, it is determined whether the timer 1 or the timer 2 has exceeded a prescribed time (S411). When the elapsed time of the timer 1 or the timer 2 is within a prescribed time, the determination in S405 regarding whether the commodity has been picked up is repeatedly performed.

When the timer 1 or the timer 2 has exceeded a prescribed time in S411, the error is displayed (S412) and the processing is ended. When the prescribed time set in advance has passed after the commodity 2 was arranged in the commodity display rack 8 and the timer 1 or the timer 2 expires, the unit for managing a commodity remaining for a long term 19 displays on the display unit 13 that the timer has expired and there is a commodity remaining for a long term. That the timer has exceeded the prescribed time may be sent from the commodity information reading apparatus 7 to the store management device 1 using the communication network 3 to display error. The error may be displayed on the commodity information display device 6.

According to this exemplary embodiment, it is possible to monitor the state of arrangement of the commodities arranged in the commodity rack to detect the stock status in the commodity display rack. It is also possible to detect whether the display is a front stereoscopic display, which is an arrangement of the commodities which improves the amount of sales.

In this exemplary embodiment, the RFID tag is arranged in the commodity display location, the presence or the absence of the commodity is detected according to the intensity of the reception signal from the RFID tag, and commodity management such as display of out-of-stock information is carried out according to the presence or the absence of the commodity. Accordingly, unlike the related art, it is neither necessary to attach the RFID tag to each commodity nor to additionally prepare the interference unit, whereby it is possible to provide a commodity management system that carries out commodity management at a reduced cost.

Note that the present invention is not limited to the exemplary embodiment stated above and may be changed as appropriate without departing from the spirit of the present invention.

While a part or all of the aforementioned exemplary embodiment may be described as shown in the following Supplementary notes, they are not limited to the Supplementary notes.

(Supplementary note 1)

A commodity display rack system comprising: a plurality of specific information storage means provided on a commodity display rack, the specific information storage means storing information to specify the position; means for storing information regarding a commodity displayed on a commodity display rack; specific information reading means for transmitting, when information stored in the specific information storage means associated with the commodity display rack is read out, the information that has been read out; commodity presence/absence state determination means for determining that a commodity displayed in the commodity display rack that is stored is in the commodity display rack when the communication signal transmitted from the specific information reading means stops or an intensity of the readout signal is lower than a predetermined threshold; and out-of-stock commodity information display means and the commodity presence/absence state determination means for displaying, according to a state of reception of the information transmitted by the specific information reading means in the commodity presence/absence state determination means, information of an out-of-stock commodity stored in the commodity information storage means.

(Supplementary note 2)

The commodity display rack system according to Supplementary note 1, comprising means for storing an elapsed time from a time at which it is determined by the commodity presence/absence state change means that there has been a change in a commodity presence/absence state.

(Supplementary note 3)

The commodity display rack system according to Supplementary note 1, wherein the commodity presence/absence state determination means determines that there is no commodity in the forefront of the commodity display rack, the commodity display rack system further comprises alarm information display means of a target commodity stored in the commodity information storage means.

(Supplementary note 4)

The commodity display rack system according to Supplementary note 1, wherein the commodity presence/absence state determination means determines that the number of same kind of commodities that exist in the commodity display rack is smaller than a specified amount, and the commodity display rack system further comprises alarm information display means of a target commodity stored in the commodity information storage means.

(Supplementary note 5)

The commodity display rack system according to Supplementary note 2, comprising commodity sales history storage means, recording means to determine whether to display alarm information, and means for comparing the elapsed time with a predetermined value to determine whether to display the alarm information and displaying alarm information display means of the commodity which is determined to display the alarm information display means.

(Supplementary note 6)

The commodity display rack system according to Supplementary note 2, wherein the commodity presence/absence state determination means detects that the commodity is placed and the commodity display rack system further comprises means for displaying that the commodity has been placed for a predetermined period of time or longer.

(Supplementary note 7)

The commodity display rack system according to Supplementary notes 1 to 6, wherein the specific information storage means is an RFID tag.

(Supplementary note 8)

The commodity display rack system according to Supplementary notes 1 to 6, wherein the specific information reading means comprises an antenna that receives information transmitted from an RFID tag.

(Supplementary note 9)

The commodity display rack system according to Supplementary notes 1 to 6, wherein the commodity presence/absence state determination means comprises a reception signal intensity (RSSI: Received Signal Strength Indication) of an RFID tag.

(Supplementary note 10)

The commodity display rack system according to Supplementary notes 1 to 6, wherein the antenna that receives information transmitted from an RFID tag is a reader antenna that is formed of an open-type transmission line that is match-terminated and performs transmission and/or reception of a radio signal.
While the present invention has been described above with reference to the exemplary embodiment, the present invention is not limited to the above exemplary embodiment. Various changes that can be understood by those skilled in the art may be made on the configurations or the details of the present invention within the scope of the present invention.
This application is based upon and claims the benefit of priority from Japanese Patent Application No. 2012-265428, filed on December 4, 2012, the disclosure of which is incorporated herein in its entirety by reference.

Reference Signs List

1  STORE MANAGEMENT DEVICE
2  COMMODITY
2a  COMMODITY DISPLAY LOCATION
3  COMMUNICATION NETWORK
4  READER ANTENNA (INFORMATION RECEIVING ANTENNA)
5  RFID TAG
6  COMMODITY INFORMATION DISPLAY DEVICE
7  COMMODITY INFORMATION READING APPARATUS (RFID READER)
8  COMMODITY DISPLAY RACK
11  COMMODITY INFORMATION DATABASE
12  COMMODITY PRESENCE/ABSENCE DETERMINATION UNIT
13  DISPLAY UNIT
14  TIMER UNIT
15  OUT-OF-STOCK MANAGEMENT UNIT
16  FRONT ROW MANAGEMENT UNIT
17  PICKING TIME MANAGEMENT UNIT
18  COMMODITY STATE MANAGEMENT UNIT
19  UNIT FOR MANAGING COMMODITY REMAINING FOR LONG TERM
101  SPECIFIC INFORMATION STORAGE MEANS

| | |
|---|---|
| 102 | COMMODITY INFORMATION STORAGE MEANS |
| 103 | SPECIFIC INFORMATION READING MEANS |
| 104 | COMMODITY PRESENCE/ABSENCE STATE DETERMINATION MEANS |
| 105 | COMMODITY INFORMATION DISPLAY MEANS |
| 110 | COMMODITY DISPLAY RACK |
| 111 | COMMODITY DISPLAY LOCATION |
| 112 | COMMODITY |
| 201 | RFID CHIP |
| 202 | TAG ANTENNA |
| 203 | STRIP CONDUCTOR |
| 204 | DIELECTRIC LAYER |
| 205 | GROUND PLANE (GROUND CONDUCTOR) |
| Rt | MATCHING TERMINATION RESISTOR |

**Claims**

1. A commodity management system comprising:

a plurality of specific information storage means provided so as to correspond to commodity display locations on a commodity display rack, the specific information storage means storing location specifying information to specify the commodity display locations;
commodity information storage means for storing commodity information regarding a commodity displayed on the commodity display rack;
specific information reading means for reading out the location specifying information stored in the specific information storage means and transmitting a readout signal including the location specifying information that has been read out;
commodity presence/absence state determination means for determining the presence or the absence of the commodity corresponding to the location specifying information in the commodity display rack when the readout signal transmitted from the specific information reading means stops or an intensity of the readout signal is lower than a predetermined threshold; and
commodity information display means for displaying, according to a result of a determination in the commodity presence/absence state determination means, the commodity information stored in the commodity information storage means in relation to the commodity that is determined.

2. The commodity management system according to Claim 1, wherein the commodity information that is displayed comprises information on an out-of-stock commodity stored in the commodity information storage means.

3. The commodity management system according to Claim 1 or 2, comprising elapsed time storage means for storing, when it is determined by the commodity presence/absence state determination means that there has been a change in a commodity presence/absence state of the commodity display rack, an elapsed time from the point of the change.

4. The commodity management system according to any one of Claims 1 to 3, comprising forefront alarm information display means for displaying, when it is determined by the commodity presence/absence state determination means that there is no commodity in a forefront of the commodity display rack, alarm information of a commodity which is determined not to be arranged in the forefront stored in the commodity information storage means.

5. The commodity management system according to any one of Claims 1 to 4, comprising display amount alarm information display means for displaying, when it is determined by the commodity presence/absence state determination means that an amount of the same kind of commodities that exist in the commodity display rack is smaller than a specified amount, an alarm of the commodity whose number has been determined to be smaller than the specified amount stored in the commodity information storage means.

6. The commodity management system according to Claim 3, comprising elapsed time alarm information display means for comparing the elapsed time with a predetermined value to determine whether to display alarm information to display alarm information of a commodity which is determined to display the alarm information.

7. The commodity management system according to Claim 3, comprising means for displaying alarm information of a commodity remaining for a long term for detecting that, after it is determined by the commodity presence/absence state determination means that the commodity is arranged in the commodity display rack, the commodity has been placed in the commodity display rack for a predetermined period of time or longer and displaying alarm information.

8. The commodity management system according to any one of Claims 1 to 7, wherein the specific information storage means is an RFID tag.

9. A commodity management method comprising:

providing a plurality of specific information storage means corresponding to commodity display locations on a commodity display rack, the specific information storage means storing location specifying information to specify the commodity display locations;
storing commodity information regarding a commodity displayed on the commodity display rack in commodity information storage means;
reading out the location specifying information stored in the specific information storage means and transmitting a readout signal including the location specifying information that has been read out;
determining the presence or the absence of the commodity corresponding to the location specifying information in the commodity display rack when the readout signal that is transmitted stops or an intensity of the readout signal is lower than a predetermined threshold; and
displaying, according to a result of a determination regarding the presence or the absence of the commodity, the commodity information stored in the commodity information storage means in relation to the commodity that is determined.

10. A non-transitory computer readable medium storing a commodity management program for causing a computer to execute commodity management processing, the commodity management processing comprising:

storing commodity information regarding a commodity displayed on a commodity display rack in commodity information storage means;
receiving a readout signal including location specifying information read out from specific information storage means arranged on the commodity display rack;
determining the presence or the absence of the commodity corresponding to the location specifying information in the commodity display rack when the readout signal stops or an intensity of the readout signal is lower than a predetermined threshold; and
displaying, according to a result of a determination regarding the presence or the absence of the commodity, the commodity information stored in the commodity information storage means in relation to the commodity that is determined.

Fig. 1

Fig. 2

Fig. 3

UPPER VIEW

Fig. 4

FRONT VIEW

SIDE VIEW

EP 2 930 680 A1

Fig. 5

| DISTANCE Y | $1/4 \cdot (\lambda/2\pi)$ $\fallingdotseq 0.04\lambda$ | $1/2 \cdot (\lambda/2\pi)$ $\fallingdotseq 0.08\lambda$ | $\lambda/2\pi$ $\fallingdotseq 0.16\lambda$ | $2 \cdot (\lambda/2\pi)$ $\fallingdotseq 0.32\lambda$ | $\lambda$ | $2\lambda$ |
|---|---|---|---|---|---|---|
| WHEN 950 MHz | 1.3cm | 2.5cm | 5.0cm | 10.1cm | 31.6cm | 63.2cm |
| QUASI-STATIC ELECTRIC FIELD $(1/Y^3)$ | 64 | 8 | 1 | $1/8 \fallingdotseq 0.13$ | $\fallingdotseq 0.004$ | $\fallingdotseq 5 \times 10^{-4}$ |
| INDUCED ELECTRIC FIELD $(1/Y^2)$ | 16 | 4 | 1 | $1/4 \fallingdotseq 0.13$ | $\fallingdotseq 0.025$ | $\fallingdotseq 6 \times 10^{-3}$ |
| RADIATED ELECTRIC FIELD $(1/Y)$ | 4 | 2 | 1 | $1/2 \fallingdotseq 0.5$ | $\fallingdotseq 0.16$ | $\fallingdotseq 0.08$ |

Fig. 6

Fig. 7

Fig. 8

```
                    ┌─────────────┐
                    │    START    │
                    └──────┬──────┘
                           ↓
              ┌────────────────────────┐
              │   PICK UP COMMODITY    │──── S201
              └───────────┬────────────┘
                          ↓
              ┌────────────────────────┐
              │  SPECIFY COMMODITY THAT│──── S202
              │  HAS BEEN PICKED UP    │
              └───────────┬────────────┘
                          ↓
              ┌────────────────────────┐
              │      START TIMER       │──── S203
              └───────────┬────────────┘
                          ↓              S204
                      ◇ COMMODITY ◇   YES
                        RETURNED?  ─────────→ ...
                          │ NO
                          ↓              S206
                      ◇ COMMODITY ◇   YES
                        PURCHASED? ─────────→ ...
                          │ NO
                          ↓
                  ◇ TIMER EXCEEDS ◇   S209
                      PRESCRIBED
                    PERIOD OF TIME? ◇
                          │ YES
                          ↓
              ┌────────────────────────┐
              │     DISPLAY ERROR      │──── S210
              └───────────┬────────────┘
                          ↓
                    ┌─────────────┐
                    │     END     │
                    └─────────────┘
```

S205 — END TIMER → END

S208 — RECORD ELAPSED TIME

S207 — END TIMER

Fig. 9

```
        ┌─────────────┐
        │    START    │
        └─────────────┘
               │
               ▼
      ┌──────────────────┐  ── S301
      │     ARRANGE      │
      │    COMMODITY     │
      └──────────────────┘
               │
               ▼
      ┌──────────────────┐  ── S302
      │   START TIMER    │
      └──────────────────┘
               │
               ▼
      ┌──────────────────┐  ── S303
  ┌──▶│  DISPLAY STATE   │◀─────────────┐
  │   └──────────────────┘              │
  │            │                        │
  │            ▼                        │
  │       ╱─────────╲        ── S304    │
  │      ╱  TIMER ELAPSED TIME ╲        │
  │     ╱   EQUAL TO OR LARGER  ╲   NO  │
  │     ╲    THAN PRESCRIBED    ╱───────┘
  │      ╲   PERIOD OF TIME?   ╱
  │       ╲─────────╱
  │            │ YES
  │            ▼
  │   ┌──────────────────┐  ── S305
  │   │    END TIMER     │
  │   └──────────────────┘
  │            │
  │            ▼
  │   ┌──────────────────┐  ── S306
  │   │  DISPLAY STATE   │
  │   └──────────────────┘
  │            │
  │            ▼
  │      ┌─────────┐
  │      │   END   │
  │      └─────────┘
```

Fig. 10

EP 2 930 680 A1

Fig. 11

```
                    ┌─────────┐
                    │  START  │
                    └────┬────┘
                         ↓
              ┌──────────────────┐
              │     ARRANGE      │── S401
              │    COMMODITY     │
              └────────┬─────────┘
                       ↓
              ┌──────────────────┐
              │  START TIMER 1   │── S402
              └────────┬─────────┘
                       ↓
              ┌──────────────────┐                              S407
              │  START TIMER 2   │── S403           ┌──────────────────────────────┐
              └────────┬─────────┘         →────────│        RESET TIMER 2         │
                       ↓                   │        │ NUMBER OF TIMES OF PICKUP+1  │
         ┌────────────────────────┐        │        └──────────────┬───────────────┘
    →────│ DETECT PRESENCE OR     │── S404 │              YES       ↑
    │     │ ABSENCE OF COMMODITY  │        │                        │
    │     └───────────┬───────────┘        │                        │
    │                 ↓                     │                        │
    │         ╱ COMMODITY PICKED ╲   YES    │          ╱   COMMODITY   ╲── S406
    │        ╱       UP?          ╲─────────┘─────────╱    RETURNED?     ╲
    │        ╲          ── S405   ╱                    ╲                 ╱
    │         ╲                  ╱                      ╲               ╱
    │              │ NO                                    │ NO
    │              ↓                                       ↓
    │     ╱ TIMER 1 OR 2  ╲── S411              ┌──────────────────┐
    │    ╱  EXCEED PRESCRIBED ╲                 │    COMMODITY     │── S408
    └───╲  PERIOD OF TIME?    ╱                 │    PURCHASED     │
     NO  ╲                   ╱                  └────────┬─────────┘
          ╲                 ╱                            ↓
             │ YES                             ┌──────────────────┐
             ↓                                 │    END TIMER     │── S409
    ┌──────────────────┐                       └────────┬─────────┘
    │  DISPLAY ERROR   │── S412                          ↓
    └────────┬─────────┘                       ┌──────────────────┐
             ↓                                 │  RECORD ELAPSED  │── S410
        ┌─────────┐                            │      TIME        │
        │   END   │                            └────────┬─────────┘
        └─────────┘                                     ↓
                                                   ┌─────────┐
                                                   │   END   │
                                                   └─────────┘
```

Fig. 12

Fig. 13

931

935

924

933

932

934

Fig. 14

## INTERNATIONAL SEARCH REPORT

| | International application No. |
|---|---|
| | PCT/JP2013/005399 |

**A. CLASSIFICATION OF SUBJECT MATTER**
*G06Q30/06*(2012.01)i, *G06K17/00*(2006.01)i, *A47F10/02*(2006.01)n

According to International Patent Classification (IPC) or to both national classification and IPC

**B. FIELDS SEARCHED**

Minimum documentation searched (classification system followed by classification symbols)
G06Q30/06, G06K17/00, A47F10/02

Documentation searched other than minimum documentation to the extent that such documents are included in the fields searched
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2009-100952 A  (Okamura Corp.),<br>14 May 2009 (14.05.2009),<br>paragraphs [0013] to [0104]<br>(Family: none) | 1-3,8-10<br>4-7 |
| Y<br>A | JP 2005-228292 A  (Matsushita Electric<br>Industrial Co., Ltd.),<br>25 August 2005 (25.08.2005),<br>paragraphs [0037] to [0096]<br>(Family: none) | 1-3,8-10<br>4-7 |
| A | JP 2005-034358 A  (NEC Corp.),<br>10 February 2005 (10.02.2005),<br>entire text; all drawings<br>(Family: none) | 1-10 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 31 October, 2013 (31.10.13) | 12 November, 2013 (12.11.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/005399

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-211451 A  (Okamura Corp.),<br>24 September 2010 (24.09.2010),<br>entire text; all drawings<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005034358 A
- JP 2010211451 A
- JP 2012265428 A